# EUROPÄISCHE PATENTSCHRIFT

(11) **EP 3 022 835 B1**
(45) Veröffentlichungstag und Bekanntmachung des Hinweises auf die Patenterteilung: **03.06.2020**
(21) Anmeldenummer: 14739841.6
(22) Anmeldetag: 17.07.2014
(51) Int. Cl.: H02M 1/00, H02J 3/38

(54) **WECHSELRICHTER MIT MINDESTENS ZWEI GLEICHSTROMEINGÄNGEN, PHOTOVOLTAIKANLAGE MIT EINEM DERARTIGEN WECHSELRICHTER UND VERFAHREN ZUR ANSTEUERUNG EINES WECHSELRICHTERS**
INVERTER COMPRISING AT LEAST TWO DIRECT CURRENT INPUTS, A PHOTOVOLTAIC INSTALLATION COMPRISING SUCH AN INVERTER, AND A METHOD FOR ACTUATING AN INVERTER
ONDULEUR COMPRENANT AU MOINS DEUX ENTRÉES DE COURANT CONTINU, INSTALLATION PHOTOVOLTAÏQUE COMPRENANT UN TEL ONDULEUR ET PROCÉDÉ DE COMMANDE D'UN ONDULEUR

(30) Priorität: 19.07.2013 DE 102013107721
(43) Veröffentlichungstag der Anmeldung: 25.05.2016
(73) Patentinhaber: SMA Solar Technology AG, 34266 Niestetal (DE)
(72) Erfinder: EWIG, Carsten, 34125 Kassel (DE); MEERWART, Dietmar, 37269 Eschwege (DE)
(74) Vertreter: Lahnor, Peter
(86) Internationale Anmeldenummer: PCT/EP2014/065452
(87) Internationale Veröffentlichungsnummer: WO 2015/007872

(56) Entgegenhaltungen:
- WO-A1-2008/136978
- DE-A1-102006 023 563
- DE-U1-202012 101 240
- US-A- 6 075 295
- US-A1- 2011 273 022

## Beschreibung

Die Erfindung betrifft einen Wechselrichter mit mindestens zwei Gleichstromeingängen, die mit einem gemeinsamen Zwischenkreis gekoppelt sind, der mit einer Wechselrichterbrücke verbunden ist. Die Erfindung betrifft weiterhin eine Photovoltaikanlage mit einem derartigen Wechselrichter und ein Verfahren zur Ansteuerung eines derartigen Wechselrichters.

Wechselrichter werden beispielsweise in Photovoltaikanlagen, nachfolgend abkürzend PV-Anlagen genannt, verwendet, um einen vom einem PV-Generator erzeugten Gleichstrom in einen zur Einspeisung in ein Energieversorgungsnetz geeigneten Wechselstrom umzuwandeln. PV-Anlagen, die an oder auf Gebäuden, insbesondere Wohnhäusern, installiert sind, sind bislang größtenteils auf eine Einspeisung in ein öffentliches Energieversorgungsnetz ausgelegt. Es können jedoch Situationen beim Betrieb einer solchen PV-Anlage entstehen, bei denen mehr lokal erzeugte Energie zur Verfügung steht, als zum aktuellen Zeitpunkt in das öffentliche Energieversorgungsnetz eingespeist werden kann. In einer solchen Situation kann vorgesehen sein, dass von einem Energieversorgungsunternehmen (EVU), das das öffentliche Energieversorgungsnetz bereitstellt und/oder betreut, eine Aufforderung zur Abregelung der PV-Anlage übermittelt wird, der zufolge die maximal einzuspeisende Leistung der PV-Anlage begrenzt ist oder der zufolge ein Einspeisen gänzlich untersagt ist. Zur Übermittlung einer solchen Abregelaufforderung sind beispielsweise elektronische Kommunikationssysteme, mit denen der Wechselrichter einer PV-Anlage in Verbindung steht, bekannt. Eine Abregelung der eingespeisten Leistung kann durch den Wechselrichter auf einfache Weise durch Variation des Arbeitspunktes des PV-Generators entweder in Richtung der Leerlaufspannung oder in Richtung der Kurzschlussspannung des PV-Generators erfolgen. Jedoch verbleibt dabei eigentlich nutzbare regenerative Energie ungenutzt.

Auch wenn kein Abregelerfordernis seitens des Energieversorgungsunternehmens vorliegt, kann es aufgrund einer sinkenden Höhe einer Einspeisevergütung zunehmend interessant sein, die lokal vom PV-Generator erzeugte Energie nicht in das öffentliche Energieversorgungsnetz einzuspeisen, sondern zur Deckung eines Eigenenergieverbrauchs zu nutzen.

Die Druckschrift DE10 2006 023 563 A1 offenbart eine Photovoltaikanlage, bei der separate Hochsetzsteller, die eingangsseitig mit zugeordneten Strings verbunden sind, ausgangsseitig parallel mit einem gemeinsamen Zwischenkreis verbunden sind. Eine Nutzung der durch die String erzeugten Energie ist hier nur durch den mit dem Zwischenkreis verbundenen Wechselrichter möglich.

In der Druckschrift DE20 2012 101 240 U1 umfasst ein Energiemanagementsystem mehrere Photovoltaikmodule, die an getrennte Energiemanager angeschlossen sind. Die Energiemanager können wahlweise den Photovoltaikmodulen entnommene Leistung als Wechselstrom in ein Hausnetz einspeisen, oder zum Laden eines gemeinsamen Speichers nutzen.

Die Druckschrift US 2011 0273022 A1 offenbart ein Verfahren zur Steuerung der Leistung zwischen verschiedenen Quellen und Lasten in einem Energieverteilungssystem. Die Quellen sind jeweils über einen Umrichter mit einem gemeinsamen DC-Bus verbunden. Zudem ist eine Speichervorrichtung über einen Leistungsregler mit dem gemeinsamen DC-Bus verbunden. Sowohl der Umrichter als auch der Leistungsregler übertragen selektiv Energie auf den DC-Bus in Abhängigkeit einer auf dem DC-Bus vorhandenen Gleichspannung. Das Energieverteilungssystem weist zudem einen bidirektional operierenden Wechselrichter zwischen dem DC-Bus und einem öffentlichen Versorgungsnetz oder einer Kundenlast auf. Dabei werden die Leistungsumwandlungsvorrichtungen unabhängig voneinander gesteuert.

Die Druckschrift WO 2008 136978 A1 beschreibt ein System zur Leistungsverteilung mit zwei in Serie geschalteten Brennstoffzellen-Stacks, wobei jeder der Brennstoffzellen-Stacks über zwei separate DC/DC-Wandler mit jedem der beiden Kondensatoren eines geteilten Gleichspannungs-Zwischenkreises verbunden ist. Beschrieben wird gleichfalls ein Verfahren zum Betrieb des Systems, mit dem Ziel, einen Stromripple in den Brennstoffzellen-Stacks zu reduzieren.

Die Druckschrift US 6,075,295 offenbart einen Spannungswandler, der ausgelegt ist, zwei oder mehr Ausgangsspannungen aus einer Eingangsspannung und einer Induktivität zu wandeln. Jede Ausgangsspannung wird durch einen Schalter gebildet, der die an jeden der entsprechenden Ausgangskondensatoren gelieferte Ladung steuert.

Es ist eine Aufgabe der vorliegenden Erfindung, einen Wechselrichter, eine PV-Anlage mit einem solchen Wechselrichter und ein Ansteuerverfahren für einen solchen Wechselrichter bereitzustellen, die auf einfache Weise eine möglichst energieeffiziente Nutzung überschüssiger PV-Energie ermöglichen. Insbesondere soll eine derartige Nutzung möglich sein, ohne das zusätzliche Mess- und Steuereinrichtungen zu installieren sind, durch die sichergestellt ist, dass nicht mehr als eine vorgegebene Energiemenge in das öffentliche Energieversorgungsnetz eingespeist wird.

Diese Aufgabe wird durch einen Wechselrichter, eine PV-Anlage bzw. ein Verfahren mit den Merkmalen der unabhängigen Ansprüche gelöst. Vorteilhafte Ausgestaltungen und Weiterbildungen sind Gegenstand der abhängigen Ansprüche.

Gemäß einem ersten Aspekt der Erfindung wird diese Aufgabe durch einen Wechselrichter der eingangs genannten Art gelöst, bei dem mindestens einer der Gleichstromeingänge an einen weiteren Zwischenkreis gekoppelt ist.

Der weitere Zwischenkreis kann zur Nutzung überschüssiger Energie eingesetzt werden, indem Energie des PV-Generators aus zumindest einem PV-Teilgenerator in diesen weiteren Zwischenkreis gelenkt und von dort aus verwendet wird. Ein weiterer PV-Teilgenerator kann dabei nach wie vor seine erzeugte elektrische Leistung über den Wechselrichter in das Energieversorgungsnetz einspeisen. Durch das Umlenken der Leistung in den weiteren Zwischenkreis kann die in das Energieversorgungsnetz eingespeiste Leistung verringert oder auf Null gebracht werden und so auf eine eventuelle Abregelaufforderung seitens eines Energieversorgers reagiert werden, ohne dass die überschüssige Energie ungenutzt bleibt. Dabei ist ein nur geringer zusätzlicher apparativer Aufwand notwendig.

Der weitere Zwischenkreis kann dabei innerhalb eines Gehäuses des Wechselrichters angeordnet sein, oder aber im Rahmen einer Erweiterungseinheit in einem separaten Gehäuse angeordnet sein. Letzteres bietet sich insbesondere an, wenn ein bestehender Wechselrichter durch einen Nachrüstsatz um den weiteren Zwischenkreis erweitert wird.

Bei dem erfindungsgemäßen Wechselrichter ist der weitere Zwischenkreis über Schalter und/oder Dioden mit den Gleichstromeingängen verbunden. Die Anbindung des weiteren Zwischenkreises erfolgt dabei an geeigneter Stelle innerhalb eines zwischen den Gleichstromeingängen und dem gemeinsamen Zwischenkreis des Wechselrichters angeordneten Spannungswandlers, z.B. eines Hochsetzstellers. Dabei weist ein derartiger Spannungswandler zwei Ausgänge auf, von denen ein Ausgang mit dem gemeinsamen Zwischenkreis verbunden ist und ein weiterer Ausgang mit dem weiteren Zwischenkreis verbunden ist. Wenn der Spannungswandler beispielsweise als Hochsetzsteller ausgebildet ist, ist bevorzugt ein Mittelabgriff zwischen einer Induktivität des Hochsetzstellers und einem Schaltorgan des Hochsetzstellers durch jeweils eine Diode beziehungsweise gegebenenfalls einen aktiv steuerbaren Halbleiterschalter mit dem Ausgang und dem weiteren Ausgang gekoppelt. So wird erreicht, dass von den Gleichstromeingängen Strom in den gemeinsamen und/oder in den weiteren Zwischenkreis fließen kann, ohne dass jedoch ein Rückstrom von einem der Zwischenkreise in den anderen auftreten kann. Wenn ein Strom zwischen den Zwischenkreisen in eine Richtung, z.B. von dem weiteren Zwischenkreis in den gemeinsamen Zwischenkreis, gewünscht ist, kann dieses durch einen zusätzlichen Strompfad mit Diode, der die beiden Zwischenkreise verbindet, erreicht werden.

In einer weiteren vorteilhaften Ausgestaltung des Wechselrichters ist der weitere Zwischenkreis über einen weiteren Spannungswandler angekoppelt. Besonders bevorzugt ist der weitere Spannungswandler ein Tiefsetzsteller, ein Hochsetzsteller oder ein kombinierter Hochsetz- und Tiefsetzsteller. Selbst wenn der Spannungswandler und der weitere Spannungswandler zwischen dem Gleichstromeingang und dem weiteren Zwischenkreis angeordnet sind, wird nur einer der beiden aktiv benötigt, wenn Leistung aus dem entsprechenden PV-Teilgenerator in den weiteren Zwischenkreis fließt. Entsprechende Wandelverluste treten somit nur einfach auf und die an den weiteren Zwischenkreis angeschlossenen Verbraucher werden möglichst energieeffizient (also mit möglichst geringer Verlustleistung) versorgt.

Um eine koordinierte Ansteuerung aller Komponenten zur Steuerung des Leistungsflusses von dem PV-Generator in den Zwischenkreis und/oder den weiteren Zwischenkreis zu erreichen, werden weiter bevorzugt die Schalter und/oder der weitere Spannungswandler von einer Steuereinrichtung des Wechselrichters angesteuert.

In einer weiteren vorteilhaften Ausgestaltung des Wechselrichters ist dem weiteren Zwischenkreis eine weitere Wechselrichterbrücke nachgeschaltet. Auf diese Weise kann der weitere Zwischenkreis nicht nur zur Versorgung einer Gleichstromlast, sondern auch zur Versorgung einer Wechselstromlast dienen.

Gemäß einem weiteren Aspekt der Erfindung wird die Aufgabe durch eine PV-Anlage mit einem derartigen Wechselrichter gelöst, wobei der weitere Zwischenkreis mit einer lokalen Stromlast und/oder einem Energiespeicher verbunden ist. Die lokale Stromlast kann dabei eine lokale Gleichstromlast sein oder, unter Zwischenschaltung einer weiteren Wechselrichterbrücke, eine lokale Wechselstromlast. Besonders bevorzugt können die lokale Gleichstromlast und/oder die lokale Wechselstromlast Komponenten einer Heizungsanlage sein, insbesondere ein elektrisches Heizelement und/oder eine elektrische Umwälzpumpe. Überschüssige Leistung des PV-Generators kann so sinnvoll zum Betreiben von Komponenten genutzt werden, die der Speicherung von Energie in Form von erwärmtem Wasser dienen.

Gemäß einem weiteren Aspekt der Erfindung wird die Aufgabe durch ein Verfahren zur Ansteuerung eines Wechselrichters einer PV-Anlage gelöst. Der Wechselrichter weist dabei mindestens zwei Gleichstromeingänge auf, die mit einem gemeinsamen Zwischenkreis gekoppelt sind, der mit einer Wechselrichterbrücke verbunden ist, wobei mindestens einer der Gleichstromeingänge über einen Spannungswandler mit dem gemeinsamen Zwischenkreis verbunden ist. Dabei weist der Spannungswandler zwei Ausgänge auf, von denen ein Ausgang mit dem gemeinsamen Zwischenkreis verbunden ist und ein weiterer Ausgang mit einem weiteren Zwischenkreis verbunden ist. Der Spannungswandler weist eine Induktivität und eine mit der Induktivität verbundene Diode auf, deren Kathode den Ausgang des Spannungswandlers bildet. Der Spannungswandler weist zusätzlich eine weitere Diode oder einen aktiv steuerbaren Halbleiterschalter auf, die/der wie die Diode mit der jeweiligen Induktivität verbunden ist. Dabei wird der Spannungswandler durch die weitere Diode oder den aktiv steuerbaren Halbleiterschalter um den weiteren Ausgang erweitert, so dass mindestens einer der Gleichstromeingänge über den weiteren Ausgang des Spannungswandlers und den weiteren Spannungswandler an den weiteren Zwischenkreis gekoppelt ist, an dem eine lokale Stromlast anschließbar ist. Das Verfahren zeichnet sich dadurch aus, dass ein Leistungsfluss von zumindest einem der Gleichstromeingänge abhängig von einer entsprechend abgestimmten Ansteuerung des Spannungswandlers und des weiteren Spannungswandlers in den gemeinsamen Zwischenkreis und/oder in den weiteren Zwischenkreis gelenkt wird. Es ergeben sich die im Zusammenhang mit dem Wechselrichter beschriebenen Vorteile.

Hierbei wird in einer Ausführungsform des Verfahrens der vollständige Leistungsfluss von dem zumindest einem der Gleichstromeingänge abhängig von der entsprechend abgestimmten Ansteuerung des Spannungswandlers und des weiteren Spannungswandlers - zumindest für eine gewisse Zeitdauer - wahlweise entweder in den gemeinsamen Zwischenkreis, oder aber in den weiteren Zwischenkreis gelenkt.

In einer weiteren Ausführungsform des Verfahrens hingegen wird der Leistungsfluss von dem zumindest einem der Gleichstromeingänge abhängig von der entsprechend abgestimmten Ansteuerung des Spannungswandlers und des weiteren Spannungswandlers gleichzeitig - zumindest für eine gewisse Zeitdauer und gegebenenfalls zu unterschiedlichen Anteilen - sowohl in den gemeinsamen Zwischenkreis, als auch in den weiteren Zwischenkreis gelenkt.

In einer weiteren Ausführungsform des Verfahrens wird jeder Teilleistungsfluss von einem der Gleichstromeingänge in den gemeinsamen Zwischenkreis oder den weiteren Zwischenkreis nur über jeweils einen aktiv wandelnden Spannungswandler oder weiteren Spannungswandler geführt. Durch eine entsprechende Ansteuerung der Spannungswandler wird so eine möglichst effektive Ausnutzung der dem Wechselrichter zugeführten Energie erzielt, bei der mehrfache Wandlungsverluste verhindert sind. Bevorzugt werden die Spannungswandler so angesteuert, dass auch unterschiedlichen an den Gleichstromeingängen und dem gemeinsamen Zwischenkreis bzw. dem weiteren Zwischenkreis herrschenden Spannungen nur eine einzige Spannungswandlung in jedem der Teilleistungsflüsse erfolgt.

In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung. Die Erfindung wird nachfolgend anhand von Ausführungsbeispielen mithilfe von zwei Figuren näher erläutert. Die Figuren zeigen:
- Fig. 1: eine Darstellung einer PV-Anlage mit einem anmeldungsgemäßen Wechselrichter in einem ersten Ausführungsbeispiel in einem schematischen Schaltbild und
- Fig. 2: eine schematische Darstellung einer PV-Anlage mit einem anmeldungsgemäßen Wechselrichter in einem weiterem Ausführungsbeispiel.

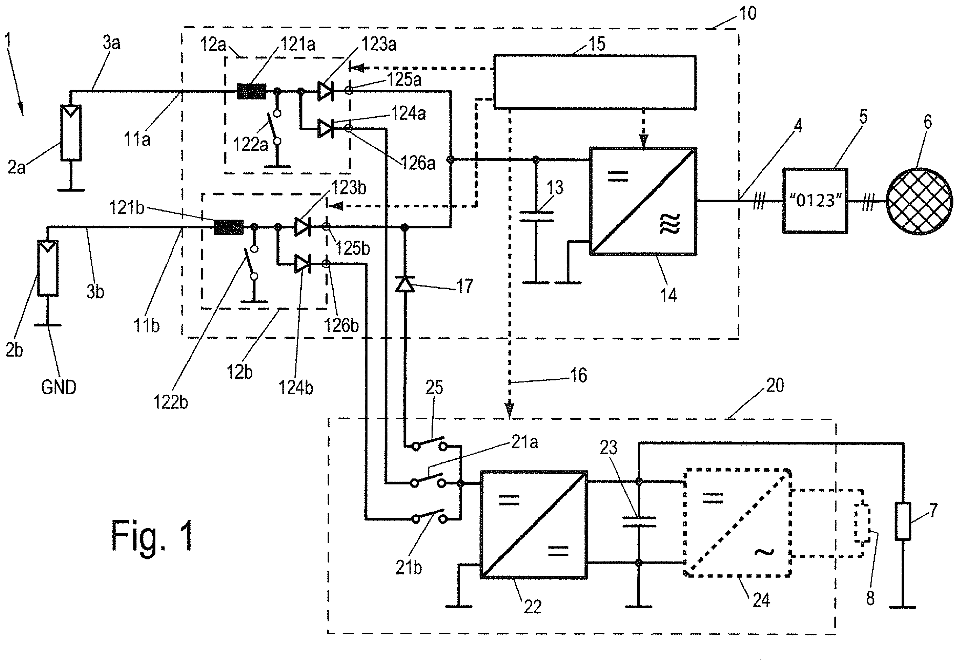

Fig. 1 zeigt eine PV-Anlage mit einem anmeldungsgemäßen Wechselrichter mit Erweiterungseinheit in einem ersten Ausführungsbeispiel in Form eines schematischen Schaltbildes.

Die PV-Anlage weist einen PV-Generator 1 auf, der zwei PV-Teilgeneratoren 2a, 2b umfasst. Die beiden PV-Teilgeneratoren 2a, 2b können beispielsweise jeweils durch eine Reihenschaltung von mehreren PV-Modulen, sogenannten Strings, gebildet sein. Weiterhin können die einzelnen PV-Teilgeneratoren 2a, 2b jeweils auch eine Parallelschaltung mehrerer Strings umfassen. Jeder PV-Teilgenerator 2a, 2b ist über separate Gleichstromleitungen 3a, 3b mit einem ebenfalls separaten Gleichstromeingang 11a, 11b eines Wechselrichters 10 verbunden. Die Gleichstromeingänge 11a, 11b führen im Wechselrichter 10 zu Spannungswandlern 12a, 12b, die ausgangsseitig gekoppelt sind und auf eine Wechselrichterbrücke 14 führen. Die Wechselrichterbrücke 14 wird dabei von einer Steuereinrichtung 15 des Wechselrichters 10 angesteuert und kontrolliert.

Der Bereich zwischen den Spannungswandlern 12a, 12b und der Wechselrichterbrücke 14 wird üblicherweise auch als Zwischenkreis bezeichnet. Er weist meist eine Anordnung aus einem oder mehreren Puffer-Kondensatoren 13 auf, auch Zwischenkreis-Kondensator(en) 13 genannt, um die Gleichspannung in diesem Zwischenkreis trotz der beim Umwandeln in Wechselstrom erfolgenden gepulsten Stromentnahme zu glätten und dem maximal entnehmbaren Spitzenstrom in einem Entnahmepuls zu erhöhen. Die Spannung in dem Zwischenkreis wird nachfolgend als Zwischenkreisspannung U₁₃ bezeichnet.

Ein Wechselrichter 10 wie der hier gezeigte wird häufig auch als Multistring-Wechselrichter bezeichnet, da er zum unabhängigen Anschluss mehrerer PV-Teilgeneratoren, die üblicherweise durch Strings gebildet sind, ausgerichtet ist. Die Spannungswandler 12a, 12b, die beispielsweise Hochsetzsteller und/oder Tiefsetzsteller sein können, können - im Regelfall unabhängig voneinander - ebenfalls von der Steuereinrichtung 15 des Wechselrichters 10 angesteuert werden, wobei insbesondere ihr Spannungsübersetzungsverhältnis zwischen dem Eingang 11a bzw. 11b und dem Ausgang, der über den Zwischenkreis mit der Wechselrichterbrücke 14 verbunden ist, variiert werden kann. Auf diese Weise können die PV-Teilgeneratoren 2a, 2b an Arbeitspunkten mit unterschiedlicher Arbeitsspannung betrieben werden. Als Arbeitspunkt wird dabei üblicherweise für jeden der beiden Teilgeneratoren 2a, 2b ein im Hinblick auf die erzeugte Leistung optimaler Arbeitspunkt gewählt, der auch als MPP (Maximum Power Point) bezeichnet wird.

Der Wechselrichter 10 ist über einen Wechselstromausgang und eine Wechselstromleitung 4 mit einem Einspeisezähler 5 verbunden, der schließlich an ein Energieversorgungsnetz 6 angekoppelt ist. Beispielhaft ist der Wechselstromausgang des Wechselrichters 10 ebenso wie das Energieversorgungsnetz 6 dreiphasig dargestellt. Es versteht sich, dass auch eine andere Anzahl an Phasen, insbesondere eine einphasige Ausgestaltung des Wechselrichters 10 und ggf. auch des Energieversorgungsnetzes 6 denkbar sind.

Auch die Anzahl von zwei PV-Teilgeneratoren 2a, 2b im PV-Generator 1 ist lediglich beispielhaft zu verstehen. Es ist durchaus denkbar, dass der Wechselrichter 10 mehr als zwei Gleichstromeingänge 11a, 11b und ggf. zugeordnete Spannungswandler 12a, 12b aufweist und entsprechend der PV-Generator 1 mehr als die dargestellten zwei PV-Teilgeneratoren 2a, 2b umfasst. Dabei muss nicht zwingend jedem Gleichstromeingang 11a, 11b ein Spannungswandler 12a, 12b zugeordnet sein. Es ist auch möglich, dass beispielsweise einer von zwei PV-Teilgeneratoren 2a, 2b direkt mit dem Zwischenkreis verbunden ist und nur der zweite über einen Spannungswandler. Zudem sind in Fig. 1 lediglich im Rahmen der Anmeldung wesentliche Elemente der PV-Anlage gezeigt. So können auf der Gleich- und/oder Wechselstromseite des Wechselrichters 10 beispielsweise nicht dargestellte Schaltorgane (zum Beispiel Trennelemente, Schütze), Filter (zum Beispiel ein Sinusfilter), Netzüberwachungseinrichtungen und/oder Transformatoren vorgesehen sein.

Ein möglicher Aufbau der Spannungswandler 12a, 12b ist im dargestellten Ausführungsbeispiel schematisch dargestellt. Die Spannungswandler 12a, 12b sind hier als Hochsetzsteller ausgebildet, mit einer Induktivität 121a bzw. 121b und einer nachgeschalteten Diode 123a bzw. 123b im Strompfad zwischen dem Eingang 11a bzw. 11b und dem gemeinsamen Zwischenkreis und einem Schaltorgan 122a bzw. 122b, das den Mittelabgriff zwischen der Induktivität 121a bzw. 121b und der Diode 123a bzw. 123b mit einem Massepotential GND verbindet. Hierbei bedeutet das Massepotential GND ein beliebiges Bezugspotential, welches nicht auf das Erdpotential (Earth GND) eingeschränkt ist, dieses aber enthalten kann. Das Schaltorgan 122a, 122b ist z.B. ein IGBT (Insulated Gate Bipolar Transistor), ein MOSFET (Metal Oxide Semiconductor Field Effect Transistor) oder ein anderer geeigneter Halbleiterschalter. Das Schaltorgan 122a, 122b wird getaktet betrieben, wobei die Schaltdauer und das Verhältnis zwischen Ein- und Ausschaltzeit, auch Tastverhältnis genannt, das Spannungsübersetzungsverhältnis des Spannungswandlers 12a, 12b bestimmen.

Anmeldungsgemäß weist der Wechselrichter 10 eine Erweiterungseinheit 20 auf, die in ein Gehäuse des Wechselrichters 10 integriert sein kann oder als eine separate Einheit ausgeführt sein kann. Die Erweiterungseinheit 20 weist einen weiteren Spannungswandler 22 auf, der abhängig von der Auslegung der PV-Anlage, also z.B. abhängig von den Spannungen der PV-Teilgeneratoren 2a, 2b, als Hochsetzsteller, als Tiefsetzsteller oder als kombinierter Hochsetz- und Tiefsetzsteller eingerichtet sein kann. Im vorliegenden Ausführungsbeispiel wird davon ausgegangen, dass der weitere Spannungswandler 22 ein Tiefsetzsteller ist.

Der Ausgang des weiteren Spannungswandlers 22 führt zu einer lokalen Stromlast, entweder unmittelbar zu einer lokalen Gleichstromlast 7 oder über eine optionale, in der Figur gestrichelt dargestellte Wechselrichterbrücke 24 zu einer lokalen Wechselstromlast 8. Parallel zum Ausgang des weiteren Spannungswandlers 22 ist ein weiterer Zwischenkreis mit einem weiteren Zwischenkreis-Kondensator 23 gebildet. Die Spannung in dem weiteren Zwischenkreis wird nachfolgend als weitere Zwischenkreisspannung U₂₃ bezeichnet.

Eingangsseitig ist der weitere Spannungswandler 22 beim vorliegenden Ausführungsbeispiel über Schalter 21a bzw. 21b mit den Spannungswandlern 12a, 12b verbunden. Hierzu weist jeder der Spannungswandler 12a, 12b eine weitere Diode 124a bzw. 124b auf, die wie die Diode 123a bzw. 123b mit der jeweiligen Induktivität 121a, 121b verbunden ist. Die Kathode der Diode 123a bzw. 123b bildet einen Ausgang 125a bzw. 125b des Spannungswandlers. Durch die weiteren Dioden 124a bzw. 124b werden die Spannungswandler 12a, 12b um jeweils einen weiteren Ausgang 126a bzw. 126b erweitert, wobei ein Rückstrom von dem gemeinsamen Zwischenkreis mit dem Zwischenkreis-Kondensator 13 zu diesen weiteren Ausgängen bzw. umgekehrt von diesen weiteren Ausgängen zum gemeinsamen Zwischenkreis unterbunden ist. Die Schalter 21a, 21b können wie hier gezeigt dem weiteren Spannungswandler vorgeschaltet sein. Es ist auch möglich, dass die Schalter 21a, 21b in dem weiteren Spannungswandler 22 integriert sind.

Mit dem dargestellten Aufbau der PV-Anlage kann die Verteilung der Energie des PV-Generators 1 in unterschiedliche Zweige erfolgen, entweder über die Wechselrichterbrücke 14 in das Energieversorgungsnetz 6 oder über den weiteren Spannungswandler 22 zu der parallel zum weiteren Zwischenkreis angebundenen lokalen Stromlast 7, 8. Dieses erfolgt durch eine abgestimmte (koordinierte) Einstellung der Übersetzungsverhältnisse der Spannungswandler 12a, 12b bzw. des weiteren Spannungswandlers 22 sowie eine entsprechende Einstellung der Schalter 21a, 21b. Die Koordination wird dadurch erreicht, dass auch die Erweiterungseinheit 20 und insbesondere ihre Komponenten wie der weitere Spannungswandler 22 und die Schalter 21a, 21b über eine Steuerverbindung 16 von der Steuereinrichtung 15 des Wechselrichters 10 angesteuert werden.

Durch das Versorgen der lokalen Stromlast - entweder der Gleichstromlast 7 oder über die weitere Wechselrombrücke 24 der Wechselstromlast 8 - kann entsprechend die über den Einspeisezähler 5 in das Energieversorgungsnetz 6 eingespeiste Leistung verringert oder auf Null gebracht werden und so auf eine eventuelle Abregelaufforderung seitens eines Energieversorgers reagiert werden.

Dabei kann wahlweise die von einem der PV-Teilgeneratoren 2a, 2b gelieferte Leistung in den weiteren Zwischenkreis gelenkt werden, wohingegen die von dem jeweils anderen der PV-Teilgeneratoren 2a, 2b gelieferte Leistung nach wie vor in das Energieversorgungsnetz 6 eingespeist wird. Alternativ kann die Leistung des gesamten PV-Generators 1 in den weiteren Zwischenkreis geführt werden, ohne dass eine Einspeisung in das Energieversorgungsnetz 6 erfolgt. Zur Lenkung des Leistungsflusses in den weiteren Zwischenkreis wird der entsprechende Schalter 21a und/oder 21b geschlossen, so dass der weitere Spannungswandler 22 mit den weiteren Ausgängen der Spannungswandler 12a und/oder 12b verbunden ist. Gleichzeitig wird das Spannungsübersetzungsverhältnis des entsprechenden Spannungswandlers 12a, 12b, der mit dem weiteren Spannungswandler 22 verbunden ist, so eingestellt, dass seine Ausgangsspannung kleiner ist, als die Spannung U₁₃ im Zwischenkreis mit dem Zwischenkreis-Kondensator 13. Unter Berücksichtigung einer möglichen Einspeisung ist der Minimalwert dieser Spannung durch die Scheitelspannung des Energieversorgungsnetzes 6 bestimmt und kann daher eine gewisse Höhe nicht unterschreiten. Ist die Ausgangsspannung eines der Spannungswandler 12a, 12b kleiner als die geforderte Zwischenkreis-Spannung U₁₃, erfolgt kein Leistungsfluss in den Zwischenkreis.

Falls die gewünschte Spannung U₂₃ im weiteren Zwischenkreis größer ist als die Spannung des PV-Teilgenerators 2a bzw. 2b, der seine Leistung in dem weiteren Zwischenkreis liefern soll, kann der entsprechende als Hochsetzsteller ausgebildete Spannungswandler 12a, 12b genutzt werden, um die Spannung des PV-Teilgenerators 2a, 2b auf das gewünschte Spannungsniveau zu bringen. Der als Tiefsetzsteller ausgebildete weitere Spannungswandler 22 wird in diesem Fall nicht benötigt und kann entweder deaktiviert werden (also mit einem Spannungsübertragungsverhältnis von 1:1 betrieben werden) oder vorteilhaft über ein hier nicht dargestellten Bypass-Schalter überbrückt werden. Es sind auch Ausführungsbeispiele der Erweiterungseinheit 20 denkbar, in denen der weitere Spannungswandler 22 nicht vorgesehen ist.

Ist dagegen die Spannung am entsprechenden PV-Teilgenerator 2a, 2b größer als die gewünschte Spannung U₂₃ im weitere Zwischenkreis, kann der entsprechende Spannungswandler 12a, 12b deaktiviert werden und somit ein Übersetzungsverhältnis von 1:1 aufweisen. Eine Anpassung an die (niedrigere) Spannung U₂₃ im weiteren Zwischenkreis wird dann durch tiefsetzstellenden Betrieb des weiteren Spannungswandlers 22 erreicht. In beiden Betriebsfällen, also wenn die Spannung des PV-Teilgenerators 2a, 2b größer ist als die Spannung U₂₃ oder auch wenn sie kleiner ist als die Spannung U₂₃, wird nur einer der beiden Spannungswandler, entweder der hochsetzstellende Spannungswandler 12a bzw. 12b oder der tiefsetzstellende weitere Spannungswandler 22, aktiv benötigt. Entsprechende Wandelverluste treten somit nur einfach auf und die an den weiteren Zwischenkreis angeschlossenen Verbraucher werden möglichst energieeffizient (also mit möglichst geringer Verlustleistung) versorgt.

In einer Ausführungsform der Erfindung kann diese Leistungsumlenkung in den weiteren Zwischenkreis ohne Unterbrechung über eine gewisse Zeitdauer erfolgen. In einer weiteren Ausführungsform kann sie jedoch auch innerhalb der gewissen Zeitdauer mehrfach - quasi in alternierender Art und Weise - einmal in den Zwischenkreis und einmal in den weiteren Zwischenkreis gelenkt werden.

Es liegt auch im Rahmen der Erfindung, die Umlenkung des Leistungsflusses in den weiteren Zwischenkreis abhängig vom Ladezustand des weiteren Zwischenkreis-Kondensators 23 des weiteren Zwischenkreises zu steuern. In diesem Fall wird der weitere Zwischenkreis-Kondensator 23 durch einen Leistungsfluss aus zumindest einem der PV-Teilgeneratoren 2a, 2b bis auf einen oberen Schwellenwert seiner weiteren Zwischenkreisspannung U₂₃ aufgeladen. Danach wird der Leistungsfluss in den weiteren Zwischenkreis mit dem weiteren Zwischenkreis-Kondensator 23 durch eine entsprechende Ansteuerung der Spannungswandler 12a, 12b und des weiteren Spannungswandlers 22, wie auch ggf. der Schalter 21a, 21b unterbrochen und die Leistung wieder in den Zwischenkreis mit dem Zwischenkreis-Kondensator 13 gelenkt.

Aufgrund der Leistungsentnahme durch die an den weiteren Zwischenkreis angeschlossenen lokalen Lasten sinkt die weitere Zwischenkreisspannung U₂₃. Bei Unterschreitung eines unteren Schwellwertes für die Spannung U₂₃ wird der Leistungsfluss aus dem zumindest einen der PV-Teilgeneratoren 2a, 2b wieder in den weiteren Zwischenkreis gelenkt und der weitere Zwischenkreis-Kondensator 23 wird wieder aufgeladen. Auf diese Weise kann die weitere Zwischenkreisspannung U₂₃ innerhalb eines vorgegebenen - für die Versorgung der angeschlossenen lokalen Verbraucher - sinnvollen Toleranzbandes gehalten werden.

In einer Ausführungsform der Erfindung wird der Leistungsfluss eines PV-Teilgenerators 2a, 2b - zumindest für eine gewisse Zeitdauer - entweder nur in den gemeinsamen Zwischenkreis mit dem Zwischenkreis-Kondensator 13, oder nur in den weiteren Zwischenkreis mit dem weiteren Zwischenkreis-Kondensator 23 gelenkt. Der Leistungsfluss eines PV-Teilgenerators 2a, 2b erfolgt hier demnach wahlweise entweder vollständig in den gemeinsamen Zwischenkreis oder vollständig in den weiteren Zwischenkreis. Hierbei wird der Leistungsfluss des PV-Teilgenerators 2a, 2b unabhängig davon, ob er in den gemeinsamen Zwischenkreis, oder in den weiteren Zwischenkreis gelenkt wird, lediglich maximal einmal gewandelt. Daher hat der Leistungsfluss des PV-Teilgenerators 2a, 2b, nachdem er im gemeinsamen Zwischenkreis oder im weiteren Zwischenkreis angekommen ist, lediglich maximal eine DC/DC-Wandlung erfahren und weist daher nur minimale Wandlungsverluste auf.

In einer weiteren Ausführungsform der Erfindung ist es jedoch auch möglich, den Leistungsfluss eines PV-Teilgenerators 2a, 2b - ggf. mit unterschiedlichen Anteilen - gleichzeitig sowohl in den gemeinsamen Zwischenkreis, als auch in den weiteren Zwischenkreis zu lenken. Dies ist beispielsweise dann der Fall, wenn aufgrund von Einstrahlungsbedingungen ein einem PV-Teilgenerators 2a, 2b zugeordneter DC/DC-Wandler 12a, 12b - zumindest für eine gewisse Zeitdauer - deaktiviert ist. In diesem Fall entspricht die Spannung des PV-Teilgenerators 2a, 2b bis auf den Spannungsabfall über der Diode 125a, 125b dem Spannungsabfall über dem in dem gemeinsamen Zwischenkreis angeordneten Zwischenkreis-Kondensator 13. Bei geschlossenem Schalter 21a, 21b kann jedoch nun auch zeitgleich ein Leistungsfluss aus dem PV-Teilgenerator 2a, 2b in den weiteren Zwischenkreis mit dem weiteren Zwischenkreis-Kondensator 23 erfolgen. Von dort aus kann die elektrische Leistung eine lokale Gleichstromlast 7 und/oder eine lokale Wechselstromlast 8 versorgen. Gegebenenfalls kann hierbei die Spannung durch den dem weiteren Zwischenkreis vorgeschalteten weiteren Spannungswandler 22 gewandelt werden. Auch in diesem Fall wird der Leistungsfluss bzw. werden die Leistungsflussanteile des PV-Teilgenerators 2a, 2b auf ihrem Weg in den gemeinsamen Zwischenkreis als auch in den weiteren Zwischenkreis lediglich maximal einmal gewandelt. Daher hat auch hier jeder Leistungsflussanteil des PV-Teilgenerators 2a, 2b, nachdem er in dem gemeinsamen Zwischenkreis bzw. in dem weiteren Zwischenkreis angekommen ist, lediglich maximal eine DC/DC-Wandlung erfahren und weist daher minimale Wandlungsverluste auf.

Vorteilhafterweise erfolgt unabhängig davon, ob nun der Leistungsfluss eines PV-Teilgenerators 2a, 2b vollständig wahlweise in den gemeinsamen Zwischenkreis oder in den weiteren Zwischenkreis gelenkt wird, oder ob er gleichzeitig - gegebenenfalls zu unterschiedlichen Anteilen - in den gemeinsamen Zwischenkreis, wie auch in den weiteren Zwischenkreis gelenkt wird, eine lediglich einfache Wandlung der Leistungsflussanteile in den gemeinsamen Zwischenkreis, wie auch in den weiteren Zwischenkreis. Um eine lediglich einfache Wandlung überschüssiger PV-Leistung, also des Leistungsflussanteils in den weiteren Zwischenkreis, zu erzielen, aktiviert die Steuereinrichtung 15 maximal nur einen DC/DC-Wandler entlang der Verbindung zwischen PV-Teilgenerator 2a, 2b und dem weiteren Zwischenkreis, also entweder den Spannungswandler 12a, 12b oder den weiteren Spannungswandler 22. Ein aktiv wandelnder Spannungswandler zeichnet sich durch ein getaktetes Ansteuern des Schaltorgans des DC/DC-Wandlers aus, also beispielsweise des Schaltorgans 122a, 122b des DC/DC-Wandlers 12a bzw. 12b.

Darüber hinaus kann eine Leistungsumverteilung durch die optionale Möglichkeit gegeben sein, Energie aus dem weiteren Zwischenkreis in den Zwischenkreis fließen zu lassen. Dieses ist insbesondere dann eine sinnvolle Option, wenn am weiteren Zwischenkreis ein Energiespeicher mit hoher Kapazität angebunden ist, beispielsweise eine wiederaufladbare Batterie. Um einen Leistungsfluss vom weiteren Zwischenkreis in den Zwischenkreis zu ermöglichen, ist bei dem Ausführungsbeispiel der Fig. 1 der weitere Spannungswandler als bidirektionaler Wandler ausgeführt. Auf der dem weiteren Zwischenkreis gegenüberliegenden Seite - die dann den Ausgang bildet - ist der weitere Spannungswandler 22 über einen Schalter 25 und eine Diode 17 mit dem Zwischenkreis und dem Zwischenkreis-Kondensator 13 verbunden. Im Rahmen der Erfindung ist es auch möglich, dass alternativ zu der Diode 17 ein aktiv steuerbarer Halbleiterschalter eingesetzt wird, beispielsweise, um eine auftretende Verlustleistung im Falle eines Leistungsflusses vom weiteren Zwischenkreis in den Zwischenkreis zu reduzieren. Auf Basis einer ähnlichen Überlegung ist es analog auch möglich, die weiteren Dioden 124a, 124b jeweils durch einen aktiv steuerbaren Halbleiterschalter zu substituieren.

In dem oben beschriebenen Fall wurde die Leistung lediglich eines PV-Teilgenerators 2a, 2b zumindest zweitweise in den weiteren Zwischenkreis mit dem Zwischenkreiskondensator 23 geleitet. Im Rahmen der Erfindung ist es jedoch auch möglich, mit Hilfe der Schalter 21a, 21b und der Wahl eines geeigneten Übersetzungsverhältnisses der Spannungswandler 12a, 12b die Leistung mehrerer oder aller angeschlossenen PV-Teilgeneratoren 2a, 2b in den zweiten Zwischenkreis zu lenken und damit der Versorgung einer lokalen Stromlast zukommen zu lassen, während die restlichen oder keiner der angeschlossenen PV-Teilgeneratoren 2a, 2b Leistung in den Zwischenkreis mit dem Zwischenkreiskondensator 13 und damit in das Energieversorgungsnetz 6 einspeisen.

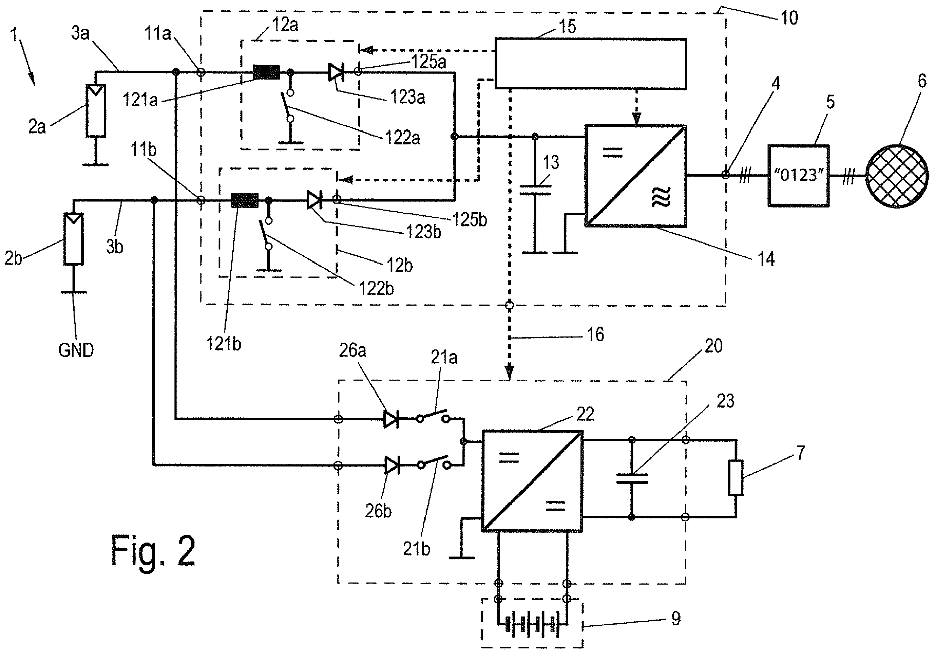

Fig. 2 zeigt eine PV-Anlage mit einem Wechselrichter 10 mit Erweiterungseinheit 20 in einem weiteren Ausführungsbeispiel. Gleiche Bezugszeichen kennzeichnen in diesem Beispiel gleiche oder gleich wirkende Elemente wie in dem ersten Ausführungsbeispiel.

Beim ersten Ausführungsbeispiel ist der Aufbau des Wechselrichters 10 bereits zur Aufnahme einer intern angeordneten Erweiterungseinheit 20 oder zur Verbindung mit einer extern angeordneten Erweiterungseinheit 20 vorbereitet, beispielsweise dadurch, dass die Spannungswandler 12a, 12b bereits mit Hilfe der Dioden 124a, 124b weitere Ausgänge bereitstellen. Bei dem in Fig. 2 gezeigten Ausführungsbeispiel ist dagegen eine Erweiterungseinheit 20 dargestellt, die als ein Nachrüstsatz mit einem im Hinblick auf seine Anschlussmöglichkeiten nicht speziell vorbereiteten Wechselrichter 10 verwendet werden kann.

Zur koordinierten Steuerung der Komponenten der Erweiterungseinheit 20 und des Wechselrichters 10 besteht jedoch auch in diesem Fall eine Steuerverbindung 16, über die die Erweiterungseinheit 20 von der Steuereinrichtung 15 des Wechselrichters 10 gesteuert wird. Im Hinblick auf die Steuerverbindung 16 ist bei dem Wechselrichter 10 eine gewisse Anpassung an die Erweiterungseinheit erfolgt. Die Steuerverbindung 16 kann dabei vorteilhaft über einen am Wechselrichter 10 sowieso vorhandenen Netzwerkanschluss realisiert werden. Sie kann jedoch auch drahtlos, z. B. per Funk, realisiert werden. Bei der Steuereinrichtung 15 kann eine Anpassung eines Steuerprogramms im Rahmen eines sognannten Firmware-Updates erfolgen, so dass die steuerungstechnische Einbindung der Erweiterungseinheit 20 letztlich ohne Änderungen des Aufbaus des Wechselrichters 10, mit anderen Worten ohne Hardware-Änderungen, möglich ist.

In einem bevorzugten Ausführungsbeispiel der Fig. 2 ist die Erweiterungseinheit 20 in einem separaten und nicht in einem mit dem Wechselrichter 1 gemeinsamen Gehäuse untergebracht. Die Erweiterungseinheit 20 weist wiederum einen weiteren Spannungswandler 22 mit eingangsseitig vorgelagerten Schaltern 21a, 21b auf. Der weitere Spannungswandler 22 kann als Hochsetzsteller, als Tiefsetzsteller, bevorzugt jedoch als kombinierter Hochsetz- und Tiefsetzsteller eingerichtet sein. Ausgangsseitig ist der weitere Spannungswandler 22 mit einem weiteren Zwischenkreis mit einem weiteren Zwischenkreis-Kondensator 23 sowie einer Gleichstromlast 7 verbunden. Die in Fig. 1 optionale weitere Wechselrichterbrücke 24 mit nachgeschalter lokaler Wechselstromlast 8 ist vorliegend nicht dargestellt, kann aber optional ebenfalls vorhanden sein.

Der weitere Spannungswandler 22 weist vorliegend zusätzlich eine Ladeeinrichtung auf, die über zusätzliche Ausgänge mit einer Batterie 9 verbunden ist. Die Batterie 9 dient als Energiespeicher und kann entsprechend über den weiteren Spannungswandler 22 bei einem Überangebot der von dem PV-Generator 1 bereitgestellten Leistung aufgeladen werden und bei Bedarf, z.B. bei nicht ausreichend hoher PV-Energie, zur Versorgung der lokalen Gleichstromlast 7 eingesetzt werden. Alternativ zu dem in Fig. 2 dargestellten Fall kann die Batterie 9 auch über eine entsprechende Ladeeinrichtung oder aber lediglich über eine Schalteinrichtung unmittelbar mit dem weiteren Zwischenkreis verbunden sein. Weiterhin ist es denkbar, dass die Batterie 9 mit einem weiteren, hier nicht dargestellten Eingang des Wechselrichters 10 verbunden ist. Dieses kann analog zu den Eingängen 11a, 11b ein zum Anschluss eines PV-Teilgenerators geeigneter Eingang sein, der intern über einen Spannungswandler auf den Zwischenkreis führt. Auf diese Weise kann die in der Batterie 9 gespeicherte Energie auch dem Zwischenkreis des Wechselrichters 10, oder einem weiteren (hier nicht dargestellten) Wechselrichter zugeführt und letztendlich in das Energieversorgungsnetz 6 eingespeist werden.

Der Eingang des weiteren Spannungswandlers 22 ist über die Schalter 21a, 21b mit dem PV-Teilgenerator 2a bzw. dem PV-Teilgenerator 2b verbunden. In der Verbindung sind Dioden 26a, 26b angeordnet, die - analog zu den Dioden 124a bzw. 124b des Ausführungsbeispiels der Fig. 1 - Rückströme zwischen den PV-Teilgeneratoren 2a, 2b verhindern, wenn beide Schalter 21a, 21b geschlossen sind. Wenn durch die Ansteuerung der Schalter 21a, 21b sichergestellt ist, dass nur jeweils einer der PV-Teilgeneratoren 2a, 2b mit dem weiteren Spannungswandler verbunden ist, können die Dioden 26a, 26b auch entfallen.

Als lokale Wechsel- oder Gleichstromlast 7, 8 kann beispielsweise eine elektrische Heizeinrichtung oder eine Umwälzpumpe eines lokalen Wasserkreislaufes dienen, in die die vom PV-Generator 1 gelieferte elektrische Leistung über den weiteren Spannungswandler 22 eingebracht werden kann, falls die elektrische Leistung nicht oder nicht im vollen Umfang in das Energieversorgungsnetz 6 eingespeist werden soll. Bei Einsatz einer lokalen elektrischen Last, die im Hinblick auf Konstanz und/oder Glättung keine hohen Anforderungen an den Versorgungsstrom bzw. die Versorgungsspannung stellt, z.B. einer Heizeinrichtung, kann der weitere Zwischenkreis auch ohne den weiteren Zwischenkreis-kondensator 23 ausgeführt sein.

Auch in dem Ausführungsbeispiel nach Fig. 2 wird der Leistungsfluss bzw. werden die Leistungsflussanteile eines PV-Teilgenerators 2a, 2b in den gemeinsamen Zwischenkreis als auch in den weiteren Zwischenkreis lediglich maximal einmal gewandelt. Im Unterschied zu Fig. 1 können nun jedoch der Spannungswandler 12a, 12b, als auch der weitere Spannungswandler 22 gleichzeitig betrieben werden, und dennoch hat jeder Leistungsflussanteil des PV-Teilgenerators 2a, 2b, nachdem er in dem gemeinsamen Zwischenkreis bzw. in dem weiteren Zwischenkreis angekommen ist, lediglich maximal eine DC/DC-Wandlung erfahren und weist daher minimale Wandlungsverluste auf.

### Bezugszeichenliste

- 1: PV-Generator
- 2a, 2b: PV-Teilgenerator
- 3a, 3b: Gleichstromleitung
- 4: Wechselstromausgang
- 5: Einspeisezähler
- 6: Energieversorgungsnetz
- 7: Gleichstromlast
- 8: Wechselstromlast
- 9: Batterie (Energiespeicher)

- 10: Wechselrichter
- 11a, 11b: Gleichstromeingang
- 12a, 12b: Spannungswandler
- 121a, 121b: Induktivität
- 122a, 122b: Schaltorgan
- 123a, 123b: Diode
- 124a, 124b: weitere Diode
- 125a, 125b: Ausgang
- 126a, 126b: weiterer Ausgang
- 13: Zwischen kreis-Kondensator
- 14: Wechselrichterbrücke
- 15: Steuereinrichtung
- 16: Steuerverbindung
- 17: Diode

- 20: Erweiterungseinheit
- 21a, 21b: Schalter
- 22: weiterer Spannungswandler
- 23: weiterer Zwischenkreis-Kondensator
- 24: weitere Wechselrichterbrücke
- 25: Schalter
- 26a, 26b: Diode

## Patentansprüche

1. Wechselrichtersystem umfassend einen Wechselrichter (10) und eine Erweiterungseinheit (20), wobei der Wechselrichter (10) einen gemeinsamen Zwischenkreis (13), eine mit dem gemeinsamen Zwischenkreis (13) verbundene Wechselrichterbrücke (14), mindestens einen Spannungswandler (12a, 12b) und mindestens zwei mit dem gemeinsamen Zwischenkreis (13) gekoppelte Gleichstromeingänge (11a, 11b) aufweist, wobei die Erweiterungseinheit (20) einen weiteren Zwischenkreis (23) und einen weiteren Spannungswandler (22) aufweist, wobei zwischen mindestens einem der Gleichstromeingänge (11a, 11b) und dem gemeinsamen Zwischenkreis (13) des Wechselrichters (10) der mindestens eine Spannungswandler (12a, 12b) des Wechselrichters (10) geschaltet ist und wobei der Spannungswandler (12a, 12b) zwei Ausgänge (125a, 126a, 125b, 126b) aufweist, von denen ein Ausgang (125a, 125b) mit dem gemeinsamen Zwischenkreis (13) des Wechselrichters (10) und ein weiterer Ausgang (126a, 126b) über den weiteren Spannungswandler (22) der Erweiterungseinheit (20) mit dem weiteren Zwischenkreis (23) der Erweiterungseinheit (20) verbunden ist, wobei der Spannungswandler (12a, 12b) des Wechselrichters (10) eine Induktivität (121a, 121b) und eine mit der Induktivität (121a, 121b) verbundene Diode (123a, 123b) aufweist, deren Kathode den Ausgang (125a, 125b) des Spannungswandlers (12a, 12b) bildet, **dadurch gekennzeichnet, dass** der Spannungswandler (12a, 12b) eine weitere Diode (124a, 124b) oder einen aktiv steuerbaren Halbleiterschalter aufweist, die/der wie die Diode (123a, 123b) mit der jeweiligen Induktivität (121a, 121b) verbunden ist, wobei der Spannungswandler (12a, 12b) durch die weitere Diode (124a, 124b) oder den aktiv steuerbaren Halbleiterschalter um den weiteren Ausgang (126a, 126b) erweitert wird, wobei der weitere Spannungswandler (22) der Erweiterungseinheit (20) als bidirektionaler Wandler ausgeführt ist und auf der dem weiteren Zwischenkreis (23) der Erweiterungseinheit (20) gegenüberliegenden Seite über einen Schalter (25) und eine Diode (17) oder über einen Schalter (25) und einen aktiv steuerbaren Halbleiterschalter mit dem gemeinsamen Zwischenkreis (13) des Wechselrichters (10) verbunden ist, um einen Leistungsfluss von dem weiteren Zwischenkreis (23) in den gemeinsamen Zwischenkreis (13) zu ermöglichen.

2. Wechselrichtersystem nach Anspruch 1, bei dem der weitere Zwischenkreis (23) über Schalter (21a, 21b) und/oder Dioden (124a, 124b, 26a, 26b) mit den Gleichstromeingängen (11a, 11b) verbunden ist.

3. Wechselrichtersystem nach Anspruch 2, bei dem die Schalter (21a, 21b) und/oder der weitere Spannungswandler (22) von einer Steuereinrichtung (15) des Wechselrichters (10) angesteuert werden.

4. Wechselrichtersystem nach einem der Ansprüche 2 bis 3, bei dem der weitere Spannungswandler (22) ein Tiefsetzsteller, ein Hochsetzsteller oder ein kombinierter Hochsetz- und Tiefsetzsteller ist.

5. Wechselrichtersystem nach einem der Ansprüche 1 bis 3, bei dem der Spannungswandler (12a, 12b) ein Hochsetzsteller ist.

6. Wechselrichtersystem nach einem der vorangehenden Ansprüche, bei dem dem weiteren Zwischenkreis (23) eine weitere Wechselrichterbrücke (24) der Erweiterungseinheit (20) nachgeschaltet ist.

7. PV-Anlage mit einem Wechselrichtersystem gemäß einem der vorangehenden Ansprüche, bei dem der weitere Zwischenkreis (23) mit einer lokalen Stromlast und/oder einem Energiespeicher (9), insbesondere mit einer Gleichstromlast (7) und/oder über die dem weiteren Zwischenkreis (23) nachgeschaltete weitere Wechselrichterbrücke (24) mit einer lokalen Wechselstrom last (8) verbindbar ist.

8. PV-Anlage nach Anspruch 7, bei der die lokale Gleichstrom last (7) und/oder die lokale Wechselstromlast (8) Komponenten einer Heizungsanlage sind, insbesondere ein elektrisches Heizelement und/oder eine elektrische Umwälzpumpe.

9. Verfahren zur Ansteuerung eines Wechselrichtersystems einer PV-Anlage, umfassend einen Wechselrichter (10) und eine Erweiterungseinheit (20), wobei der Wechselrichter (10) einen gemeinsamen Zwischenkreis (13), eine mit dem gemeinsamen Zwischenkreis (13) verbundene Wechselrichterbrücke (14), mindestens einen Spannungswandler (12a, 12b) und mindestens zwei mit dem gemeinsamen Zwischenkreis (13) gekoppelte Gleichstromeingänge (11a, 11b) aufweist, wobei die Erweiterungseinheit (20) einen weiteren Zwischenkreis (23) und einen weiteren Spannungswandler (22) aufweist,
- wobei mindestens einer der Gleichstromeingänge (11a, 11b) über den mindestens einen Spannungswandler (12a, 12b) des Wechselrichters (10) mit dem gemeinsamen Zwischenkreis (13) des Wechselrichters (10) verbunden ist, und
- wobei der mindestens eine Spannungswandler (12a, 12b) zwei Ausgänge (125a, 125b, 126a, 126b) aufweist, von denen ein Ausgang (125a, 125b) mit dem gemeinsamen Zwischenkreis (13) des Wechselrichters (10) verbunden ist und ein weiterer Ausgang (126a, 126b) mit dem weiteren Zwischenkreis (23) der Erweiterungseinheit (20) verbunden ist, und
- wobei der mindestens eine Spannungswandler (12a, 12b) des Wechselrichters (10) eine Induktivität (121a, 121b) und eine mit der Induktivität (121a, 121b) verbundene Diode (123a, 123b) aufweist, deren Kathode den Ausgang (125a, 125b) des mindestens einen Spannungswandlers (12a, 12b) bildet, und
- wobei der mindestens eine Spannungswandler (12a, 12b) eine weitere Diode (124a, 124b) oder einen aktiv steuerbaren Halbleiterschalter aufweist, die/der wie die Diode (123a, 123b) mit der jeweiligen Induktivität (121a, 121b) verbunden ist, wobei der mindestens eine Spannungswandler (12a, 12b) durch die weitere Diode (124a, 124b) oder den aktiv steuerbaren Halbleiterschalter um den weiteren Ausgang (126a, 126b) erweitert wird, so dass
- mindestens einer der Gleichstromeingänge (11a, 11b) über den weiteren Ausgang (126a, 126b) des mindestens einen Spannungswandlers (12a, 12b) und den weiteren Spannungswandler (22) der Erweiterungseinheit (20) an den weiteren Zwischenkreis (23) gekoppelt ist, an dem eine lokale Stromlast anschließbar ist,
**dadurch gekennzeichnet, dass**
der weitere Spannungswandler (22) als bidirektionaler Wandler ausgeführt ist und auf der dem weiteren Zwischenkreis (23) gegenüberliegenden Seite über einen Schalter (25) und eine Diode (17) oder über einen Schalter (25) und einen aktiv steuerbaren Halbleiterschalter mit dem gemeinsamen Zwischenkreis (13) des Wechselrichters (10) verbunden ist, um einen Leistungsfluss von dem weiteren Zwischenkreis (23) der Erweiterungseinheit (20) in den gemeinsamen Zwischenkreis (13) zu ermöglichen, und wobei ein Leistungsfluss von zumindest einem der Gleichstromeingänge (11a, 11b) abhängig von einer entsprechend abgestimmten Ansteuerung des mindestens einen Spannungswandlers (12a, 12b) und des weiteren Spannungswandlers (22) der Erweiterungseinheit (20) in den gemeinsamen Zwischenkreis (13) des Wechselrichters (10) und/oder in den weiteren Zwischenkreis (23) der Erweiterungseinheit (20) gelenkt wird.

10. Verfahren nach Anspruch 9, bei dem der Leistungsfluss von dem zumindest einem der Gleichstromeingänge (11a, 11b) vollständig wahlweise entweder in den gemeinsamen Zwischenkreis (13) oder in den weiteren Zwischenkreis (23) gelenkt wird.

11. Verfahren nach Anspruch 9, bei dem der Leistungsfluss von dem zumindest einem der Gleichstromeingänge (11a, 11b) in gleichen oder unterschiedlichen Anteilen in den gemeinsamen Zwischenkreis (13) und in den weiteren Zwischenkreis (23) gelenkt wird.

12. Verfahren nach einem der Ansprüche 9 bis 11, bei dem alle Teilleistungsflüsse von einem der Gleichstromeingänge (11a, 11b) in den gemeinsamen Zwischenkreis (13) oder den weiteren Zwischenkreis (23) nur über jeweils einen aktiv wandelnden Spannungswandler (12a, 12b) oder weiteren Spannungswandler (22) führen, insbesondere bei unterschiedlichen an den Gleichstromeingängen (11a, 11b), dem gemeinsamen Zwischenkreis (13) bzw. dem weiteren Zwischenkreis (23) herrschenden Spannungen.

## Claims

1. An inverter system comprising an inverter (10) and an expansion unit (20), wherein the inverter (10) comprises a common DC link (13), an inverter bridge (14) connected to the common DC link (13), at least one voltage converter (12a, 12b) and at least two direct current inputs (11a, 11b) coupled to the common DC link (13), wherein the extension unit (20) comprises a further DC link (23) and a further voltage converter (22),
wherein between at least one of the direct current inputs (11a, 11b) and the common DC link (13) of the inverter (10) the at least one voltage converter (12a, 12b) of the inverter (10) is connected, and
wherein the voltage converter (12a, 12b) comprises two outputs (125a, 126a, 125b, 126b), of which one output (125a, 125b) is connected to the common DC link (13) of the inverter (10) and a further output (126a, 126b) is connected via the further voltage converter (22) of the extension unit (20) to the further DC link (23) of the extension unit (20),
wherein the voltage converter (12a, 12b) of the inverter (10) comprises an inductance (121a, 121b) and a diode (123a, 123b) connected to the inductance (121a, 121b), the cathode of which diode forms the output (125a, 125b) of the voltage converter (12a, 12b),
**characterized in that** the voltage converter (12a, 12b) comprises a further diode (124a, 124b) or an actively controllable semiconductor switch, which, like the diode (123a, 123b), is connected to the respective inductance (121a, 121b),
wherein the voltage converter (12a, 12b) is expanded by the further diode (124a, 124b) or the actively controllable semiconductor switch with regards to the further output (126a, 126b),
wherein the further voltage converter (22) of the expansion unit (20) is formed as a bidirectional converter and is connected on the side opposite the further DC link (23) of the expansion unit (20) to the common DC link (13) of the inverter (10) via a switch (25) and a diode (17) or via a switch (25) and an actively controllable semiconductor switch in order to enable a power flow from the further DC link (23) into the common DC link (13).

2. The inverter system as claimed in claims 1, wherein the further DC link (23) is connected to the DC inputs (11a, 11b) via switches (21a, 21b) and/or diodes (124a, 124b, 26a, 26b).

3. The inverter system as claimed in claim 2, wherein the switches (21a, 21b) and/or the further voltage converter (22) are/is controlled by a control unit (15) of the inverter (10).

4. The inverter system as claimed in any of claims 2 to 3, wherein the further voltage converter (22) is a buck converter, a boost converter or a combined buck-boost converter.

5. The inverter system as claimed in any of claims 1 to 3, wherein the voltage converter (12a, 12b) is a boost converter.

6. The inverter system as claimed in anyone of the preceding claims, wherein a further inverter bridge (24) of the extension unit (20) is connected downstream the further DC link (23).

7. A PV system comprising an inverter system as claimed in anyone of the preceding claims, wherein the further DC link (23) is connectable to a local electrical load and/or to an energy store (9), particularly to a DC load (7) and/or to a local AC load (8) via the additional inverter bridge (24) connected downstream the further DC link (23).

8. The PV system as claimed in claim 7, wherein the local DC load (7) and/or the local AC load (8) are components of a heating system, in particular an electrical heating element and/or an electrical circulating pump.

9. Method for controlling an inverter system of a PV system, comprising an inverter (10) and an expansion unit (20), wherein the inverter (10) comprises a common DC link (13), an inverter bridge (14) connected to the common DC link (13), at least one voltage converter (12a, 12b) and at least two direct current inputs (11a, 11b) coupled to the common DC link (13), wherein the expansion unit (20) comprises a further DC link (23) and a further voltage converter (22),
- wherein at least one of the direct current inputs (11a, 11b) is connected to the common DC link (13) of the inverter (10) via the at least one voltage converter (12a, 12b) of the inverter (10), and
- wherein the at least one voltage converter (12a and 12b) comprises two outputs (125a, 125b, 126a, 126b), of which one output (125a, 125b) is connected to the common DC link (13) of the inverter (10) and a further output (126a, 126b) is connected to the further DC link (23) of the expansion unit (20), and
- wherein the at least one voltage converter (12a, 12b) of the inverter (10) comprises an inductance (121a, 121b) and a diode (123a, 123b) connected to the inductance (121a, 121b), the cathode of which forms the output (125a, 125b) of the at least one voltage converter (12a, 12b), and
- wherein the at least one voltage converter (12a, 12b) comprises a further diode (124a, 124b) or an actively controllable semiconductor switch which, like the diode (123a, 123b), is connected to the respective inductance (121a, 121b), wherein the at least one voltage converter (12a, 12b) is extended with respect to the further output (126a, 126b) by the further diode (124a, 124b) or the actively controllable semiconductor switch, so that
- at least one of the direct current inputs (11a, 11b) is coupled via the further output (126a, 126b) of the at least one voltage converter (12a, 12b) and the further voltage converter (22) of the expansion unit (20) to the further DC link (23), to which DC link a local current load is connectable,
**characterised in that**
the further voltage converter (22) is formed as a bidirectional converter and is connected on the side opposite the further DC link (23) to the common DC link (13) of the inverter (10) via a switch (25) and a diode (17) or via a switch (25) and an actively controllable semiconductor switch in order to allow a power flow from the further DC link (23) of the expansion unit (20) into the common DC link (13), and wherein a power flow from at least one of the direct current inputs (11a, 11b) is directed into the common DC link (13) of the inverter (10) and/or into the further DC link (23) of the extension unit (20) dependent on a corresponding control of the at least one voltage converter (12a, 12b) and of the further voltage converter (22) of the expansion unit (20).

10. The method as claimed in claim 9, wherein the power flow from the at least one of the DC inputs (11a, 11b) is directed selectively entirely either into the common DC link (13) or into the further DC link (23).

11. The method as claimed in claim 9, wherein the power flow from the at least one of the DC inputs (11a, 11b) is directed in equal or different proportions into the common DC link (13) and into the further DC link (23).

12. The method as claimed in any of claims 9 to 11, wherein all partial power flows from one of the DC inputs (11a, 11b) into the common DC link (13) or the further DC link (23) are directed via only one actively converting voltage converter (12a, 12b) or further voltage converter (22), at a time, in particular in case of different voltages present at the DC inputs (11a, 11b), at the common DC link (13) and, respectively, at the additional DC link (23).

## Revendications

1. Système d'onduleur comportant un onduleur (10) et une unité d'expansion (20),
dans lequel l'onduleur (10) comporte un circuit intermédiaire commun (13), un pont d'onduleur (14) connecté au circuit intermédiaire commun (13), au moins un transformateur de tension (12a, 12b) et au moins deux entrées de courant continu (11a, 11b) couplées au circuit intermédiaire commun (13), l'unité d'extension (20) comportant un autre circuit intermédiaire (23) et un autre transformateur de tension (22),
dans lequel le au moins un transformateur de tension (12a, 12b) de l'onduleur (10) est connecté entre au moins une des entrées de courant continu (11a, 11b) et le circuit intermédiaire commun (13) de l'onduleur (10), et dans lequel le transformateur de tension (12a, 12b) comporte deux sorties (125a, 126a, 125b, 126b), dont une sortie (125a, 125b) est reliée au circuit intermédiaire commun (13) de l'onduleur (10) et une autre sortie (126a, 126b) est reliée par l'intermédiaire de l'autre transformateur de tension (22) de l'unité d'extension (20) à l'autre circuit intermédiaire (23) de l'unité d'extension (20),
dans lequel le transformateur de tension (12a, 12b) de l'onduleur (10) comporte une inductance (121a, 121b) et une diode (123a, 123b) connectée à l'inductance (121a, 121b), la cathode de laquelle diode (123a, 123b) forme la sortie (125a, 125b) du convertisseur de tension (12a, 12b),
**caractérisé en ce que** le transformateur de tension (12a, 12b) comporte une autre diode (124a, 124b) ou un commutateur à semi-conducteur à commande active qui, comme la diode (123a, 123b), est relié à l'inductance respective (121a, 121b),
dans lequel le transformateur de tension (12a, 12b) étant élargi par l'autre sortie (126a, 126b) par l'autre diode (124a, 124b) ou le commutateur à semi-conducteur à commande active,
dans lequel l'autre transformateur de tension (22) de l'unité d'extension (20) est conçu comme un transformateur bidirectionnel et est relié, sur le côté opposé à l'autre circuit intermédiaire (23) de l'unité d'extension (20), par l'intermédiaire d'un commutateur (25) et d'une diode (17) ou par l'intermédiaire d'un commutateur (25) et d'un commutateur à semi-conducteur à commande active, au circuit intermédiaire commun (13) de l'onduleur (10) afin de permettre un flux de puissance de l'autre circuit intermédiaire (23) dans le circuit intermédiaire commun (13).

2. Système d'onduleur selon la revendication 1, dans lequel l'autre circuit intermédiaire (23) est relié aux entrées de courant continu (11a, 11b) par des commutateurs (21a, 21b) et/ou des diodes (124a, 124b, 26a, 26b).

3. Système d'onduleur selon la revendication 2, dans lequel les commutateurs (21a, 21b) et/ou l'autre transformateur de tension (22) sont commandés par un dispositif de commande (15) de l'onduleur (10).

4. Système d'onduleur selon l'une des revendications 2 à 3, dans lequel l'autre transformateur de tension (22) est un convertisseur abaisseur, un convertisseur élévateur ou un convertisseur combiné élévateur et abaisseur.

5. Système d'onduleur selon l'une des revendications 1 à 3, dans lequel le transformateur de tension (12a, 12b) est un convertisseur élévateur.

6. Système d'onduleur selon l'une des revendications précédentes, dans lequel un autre pont d'onduleur (24) de l'unité d'extension (20) est connecté en aval de l'autre circuit intermédiaire (23).

7. Installation photovoltaïque avec un système d'onduleur selon l'une des revendications précédentes, dans laquelle l'autre circuit intermédiaire (23) peut être relié à une charge locale de courant et/ou à un dispositif de stockage d'énergie (9), en particulier à une charge de courant continu (7) et/ou à une charge locale de courant alternatif (8) par l'intermédiaire de l'autre pont d'onduleur (24) monté en aval de l'autre circuit intermédiaire (23).

8. Installation photovoltaïque selon la revendication 7, dans lequel la charge locale en courant continu (7) et/ou la charge locale en courant alternatif (8) sont des composants d'un système de chauffage, en particulier un élément chauffant électrique et/ou une pompe de circulation électrique.

9. Procédé de commande d'un système d'onduleur d'une installation photovoltaïque, comprenant un onduleur (10) et une unité d'extension (20), dans lequel l'onduleur (10) comporte un circuit intermédiaire commun (13), un pont d'onduleur (14) connecté au circuit intermédiaire commun (13), au moins un transformateur de tension (12a, 12b) et au moins deux entrées de courant continu (11a, 11b) couplées au circuit intermédiaire commun (13), l'unité d'extension (20) comportant un autre circuit intermédiaire (23) et un autre transformateur de tension (22),
- dans lequel au moins une des entrées de courant continu (11a, 11b) est connectée au circuit intermédiaire commun (13) de l'onduleur (10) par l'intermédiaire de l'au moins un transformateur de tension (12a, 12b) de l'onduleur (10), et
- dans lequel au moins un des transformateurs de tension (12a et 12b) comporte deux sorties (125a, 125b, 126a, 126b), dont une sortie (125a, 125b) est reliée au circuit intermédiaire commun (13) de l'onduleur (10) et une autre sortie (126a, 126b) est reliée à l'autre circuit intermédiaire (23) de l'unité d'extension (20), et
- dans lequel au moins un des transformateurs de tension (12a, 12b) de l'onduleur (10) comporte une inductance (121a, 121b) et une diode (123a, 123b) connectée à l'inductance (121a, 121b), la cathode de laquelle diode (123a, 123b) forme la sortie (125a, 125b) du au moins un transformateur de tension (12a, 12b),
- dans lequel l'au moins un transformateur de tension (12a, 12b) comportant une autre diode (124a, 124b) ou un commutateur à semi-conducteur à commande active qui, comme la diode (123a, 123b), est relié à l'inductance respective (121a, 121b), l'au moins un transformateur de tension (12a, 12b) étant prolongé par l'autre diode (124a, 124b) ou le commutateur à semi-conducteur à commande active autour de l'autre sortie (126a), 126b) est étendue de telle sorte qu'
- au moins une des entrées de courant continu (11a, 11b) est couplée par l'intermédiaire de l'autre sortie (126a, 126b) du au moins un transformateur de tension (12a, 12b) et de l'autre transformateur de tension (22) de l'unité d'extension (20) à l'autre circuit intermédiaire (23) auquel une charge de courant locale peut être raccordée,
**caractérisé en ce que**
l'autre transformateur de tension (22) est conçu comme un transformateur bidirectionnel et est relié, du côté opposé à l'autre circuit intermédiaire (23), au circuit intermédiaire commun (13) de l'onduleur (10) par l'intermédiaire d'un commutateur (25) et d'une diode (17) ou par l'intermédiaire d'un commutateur (25) et d'un commutateur à semi-conducteur à commande active, afin de permettre un flux de puissance de l'autre circuit intermédiaire (23) de l'unité d'expansion (20) dans le circuit intermédiaire commun (13), et dans lequel un flux de puissance provenant d'au moins une des entrées de courant continu (11a, 11b) est dirigé dans le circuit intermédiaire commun (13) de l'onduleur (10) et/ou dans l'autre circuit intermédiaire (23) de l'unité d'extension (20) en fonction d'une activation accordée de manière correspondante du au moins un transformateur de tension (12a, 12b) et de l'autre transformateur de tension (22) de l'unité d'extension (20).

10. Procédé selon la revendication 9, dans laquelle le flux de puissance d'au moins une des entrées de courant continu (11a, 11b) est dirigé entièrement au choix soit dans le circuit intermédiaire commun (13) soit dans l'autre circuit intermédiaire (23).

11. Procédé selon la revendication 9, dans lequel le flux de puissance provenant d'au moins une des entrées de courant continu (11a, 11b) est dirigé dans des proportions égales ou différentes dans le circuit intermédiaire commun (13) et dans l'autre circuit intermédiaire (23).

12. Procédé selon l'une des revendications 9 à 11, dans lequel toutes les puissances partielles qui passent de l'une des entrées de courant continu (11a, 11b) dans le circuit intermédiaire commun (13) ou l'autre circuit intermédiaire (23) ne passe que chaque par un transformateur de tension (12a, 12b) à conversion active ou de l'autre transformateur de tension (22), en particulier à des tensions différentes qui règnent aux entrées de courant continu (11a, 11b), au circuit intermédiaire commun (13) ou à l'autre circuit intermédiaire (23).
